# EUROPEAN PATENT SPECIFICATION

(11) **EP 3 855 997 B1**
(45) Date of publication and mention of the grant of the patent: **07.02.2024**
(21) Application number: 19761832.5
(22) Date of filing: 29.08.2019
(51) Int. Cl.: A47L 15/42, A47L 15/48

(54) **A HEAT PUMP DISHWASHER WITH REDUCED ENERGY CONSUMPTION**
WÄRMEPUMPENGESCHIRRSPÜLER MIT REDUZIERTEM ENERGIEVERBRAUCH
LAVE-VAISSELLE À POMPE À CHALEUR AVEC CONSOMMATION D'EAU RÉDUITE

(30) Priority: 26.09.2018 TR 201813919
(43) Date of publication of application: 04.08.2021
(73) Proprietor: Arçelik Anonim Sirketi, 34445 Istanbul (TR)
(72) Inventor: POYRAZ, Onur, 34950 ISTANBUL (TR); SAGLICAN, Emre, 34950 ISTANBUL (TR); AYNUR, Tolga Nurettin, 34950 ISTANBUL (TR); KUTUK, Erkan, 34950 ISTANBUL (TR); KARAKAYA, Erkan, 34950 ISTANBUL (TR)
(86) International application number: PCT/EP2019/073031
(87) International publication number: WO 2020/064255

(56) References cited:
- WO-A1-2016/177718
- JP-A- 2007 125 198
- KR-B1- 101 317 621
- US-A1- 2016 153 135

## Description

The present invention relates to a heat pump dishwasher.

The heat pump system in the heat pump dishwashers is composed of a compressor which pressurizes a refrigerant fluid (cycle fluid, fluid, refrigerant, ...) and provides the circulation thereof, a pipe line wherein the refrigerant circulates, a condenser, an evaporator, and an expansion element, for example a capillary. In the heat pump dishwashers, the water heating process is realized by means of the heat pump system. The washing water accumulated under the tub is delivered to the water heating receptacle which contains the condenser by means of the circulation pump. The evaporator in the heat pump system draws heat from the environment while the compressor delivers heat to the condenser, and the condenser transfers heat to the washing water. The compressor, the condenser, the capillary and the evaporator are connected to each other by means of the pipe line, and by means of the fluid passing through the pipe line, the cycle is performed. The pipe line connecting the components to each other is a closed line, and as long as the heat pump is operated, the fluid is circulated in said line. The evaporator draws heat to said pipe line from the environment while the compressor pressurizes the fluid so as to enable the same to heat up and be circulated. The condenser transfers the heat of said heated fluid to the washing water. After the condenser, the temperature of the fluid in the pipe line should be decreased again. Thus, said fluid is delivered to the evaporator in cold state, enabling the evaporator to function as a cold surface. The evaporator can draw heat to the system if cooled down, thus ensuring the continuity of the system. The capillary decreases the temperature of the fluid between the condenser and the evaporator. While flowing through the capillary which has a very narrow cross-section, the fluid loses pressure and cools down. However, since positioned in the ambient air in such a system, the capillary draws heat from the environment, thus cannot decrease the temperature of the fluid. In case the fluid draws heat in the capillary before reaching the evaporator, the evaporator's capacity of drawing heat decreases. In summary, the capillary heats up more than necessary, and as a result the evaporator also heats up more than necessary. In this case, since the evaporator cannot draw heat efficiently (is not cold enough), the heating performance of the system decreases, energy consumption increases and the washing program duration increases.

In the state of the art, International Patent Application Document No. WO2016177718, is disclosed a dishwasher comprising a heat pump.

In the state of the art, United States Application Document No. US2016153135, is disclosed a laundry machine with a heat pump whose heat exchange efficiency is enhanced by improving the heat exchange structure.

The Patent No. EP2215955 (B1) relates to a heat pump dishwasher which comprises two evaporators and wherein the energy consumption is reduced.

The aim of the present invention is the realization of a dishwasher wherein the performance of the heat pump is increased and the energy consumption is decreased by cooling the capillary, which is an expansion element enabling the pressure of the refrigerant to be decreased.

The dishwasher realized in order to attain the aim of the present invention is defined in independent claim 1. This dishwasher is of heat pump type, and comprises a compressor, a condenser, an evaporator, a capillary as expansion element and a condensation receptacle wherein the water condensing on the evaporator is accumulated, which together perform the refrigerant cycle. In the heat pump system of the dishwasher, the capillary which is disposed between the condenser and the evaporator and "which is not desired to be heated" is cooled down with the cold water condensing in the evaporator.

The heat pump dishwasher realized in order to attain the aim of the present invention is illustrated in the attached figures, where:
Figure 1 - is the schematic view of a heat pump dishwasher.
Figure 2 - is the schematic view of the heat pump system in an embodiment which does not form part of the claimed invention.
Figure 3 - is the schematic view of the heat pump system in an embodiment of the present invention.
Figure 4 - is the schematic view of the heat pump system in another embodiment which does not form part of the claimed invention.
Figure 5 - is the schematic view of the dishwasher in an embodiment which does not form part of the claimed invention.
Figure 6 - is the schematic view of the dishwasher in another embodiment which does not form part of the claimed invention.

The elements illustrated in the figures are numbered as follows:
1. Dishwasher
2. Tub
3. Circulation pump
4. Rack
5. Spray arm
6. Heat pump
7. Compressor
8. Condenser
9. Evaporator
10. Capillary
11. Refrigerant duct
12. Fan
13. Condensation receptacle
14. First pump
15. First receptacle
16. Mains tap
17. Water tank
18. Second pump
19. Second receptacle

The dishwasher (1) comprises a tub (2); a circulation pump (3) which provides the delivery of the washing water into the washing environment in the tub; at least one rack (4) wherein the items to be washed are placed; at least one spray arm (5) which provides the delivery of the washing water to the racks (4); and a heat pump (6) which heats the washing water.

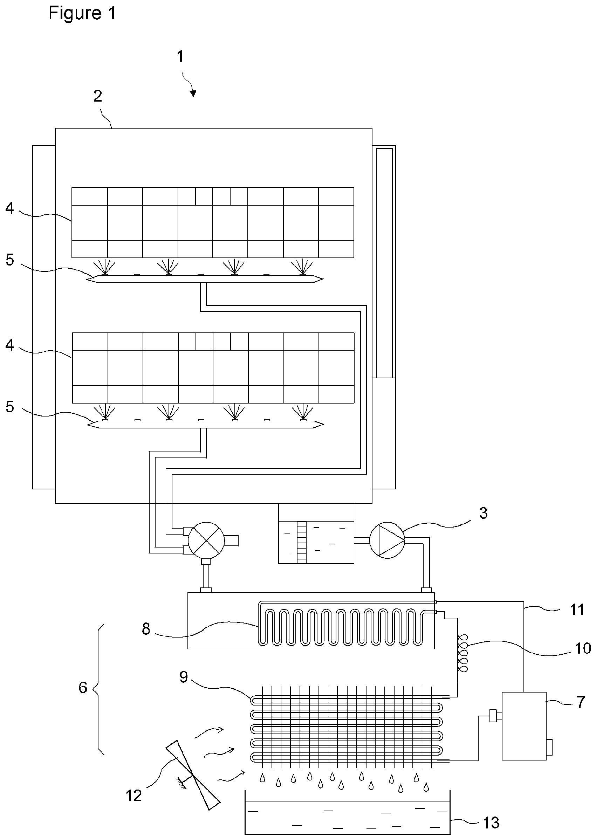

The heat pump (6) comprises a compressor (7) which performs the refrigerant cycle, a condenser (8) which is used for heating the washing water, an evaporator (9) which draws heat from the outer environment and transfers the same to the condenser (8) by means of the compressor (7), a capillary (10) which is disposed between the condenser (8) and the evaporator (9) and which decreases the pressure and hence the temperature of the refrigerant, a refrigerant line (11) composed of flow pipes wherein the refrigerant fluid (hereinafter "refrigerant" in short) flows, and at least one fan (12) which provides the heat transfer by blowing the ambient air onto the evaporator (9) (Figure 1).

The dishwasher (1) of the present invention comprises the capillary (10) which is cooled down with the cold water which condenses in the evaporator (9) during the operation of the heat pump (6) and leaves the evaporator (9).

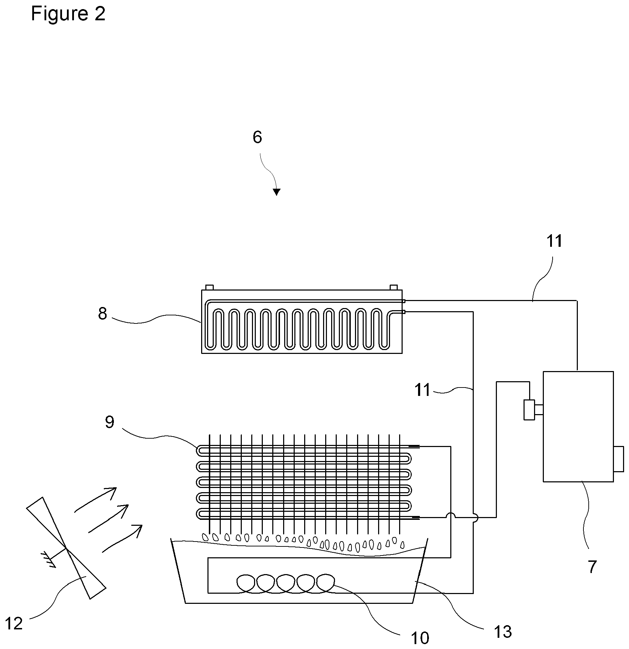

In an embodiment which does not form part of the claimed invention, the dishwasher (1) comprises a condensation receptacle (13) wherein the water condensing on the evaporator (9) is collected, the refrigerant line (11) of which the part between the condenser (8) and the evaporator (9) extends up to the condensation receptacle (13), and the capillary (10) which is positioned in the condensation receptacle (13) (Figure 2).

In this embodiment, the part of the refrigerant line (11) between the condenser (8) outlet and the evaporator (9) inlet extends up to the condensation receptacle (13), and the capillary (10) is positioned in the condensation receptacle (13) so as to be immersed in the water in the condensation receptacle (13). The temperature of the water collected in the condensation receptacle (13) is between 0 and 15°C due to the evaporator (9), which is the "cold" component of the heat pump (6), and thus the capillary (10) is efficiently cooled.

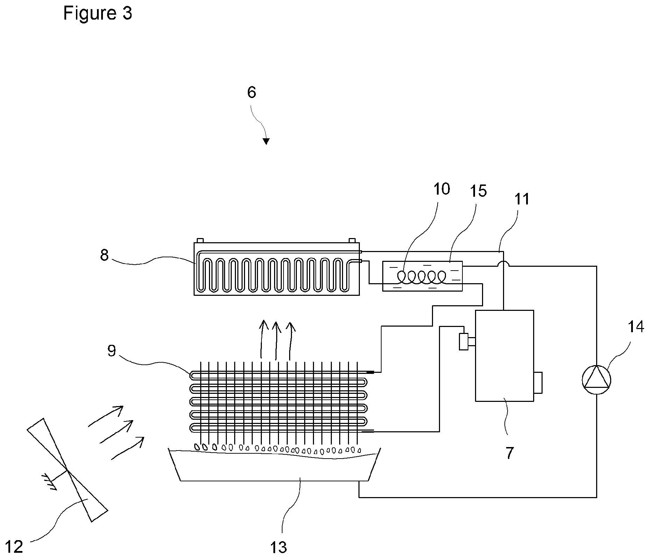

In an embodiment of the present invention, the dishwasher (1) comprises a first receptacle (15) into which the condensate collected in the condensation receptacle (13) is delivered by means of a first pump (14), and the capillary (10) is placed into the first receptacle (15) (Figure 3).

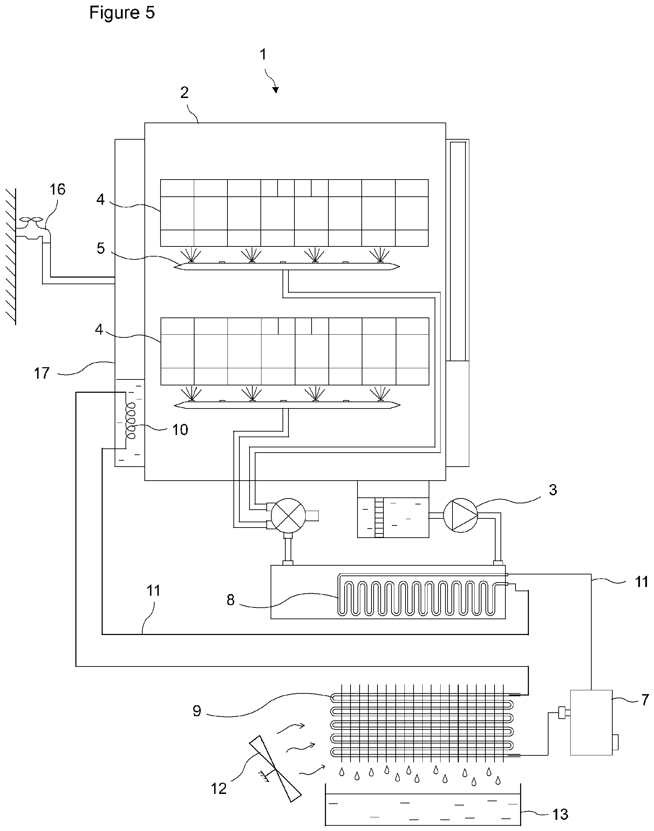

In another embodiment which does not form part of the claimed invention, the dishwasher (1) comprises a water tank (17) wherein the water taken from the mains tap (16) is accumulated before the washing process so as to provided additional water for the washing process, and the part of the refrigerant line (11) between the condenser (8) and the evaporator (9) extends up to the water tank (17) and the capillary (10) is placed into the water tank (17) (Figure 5).

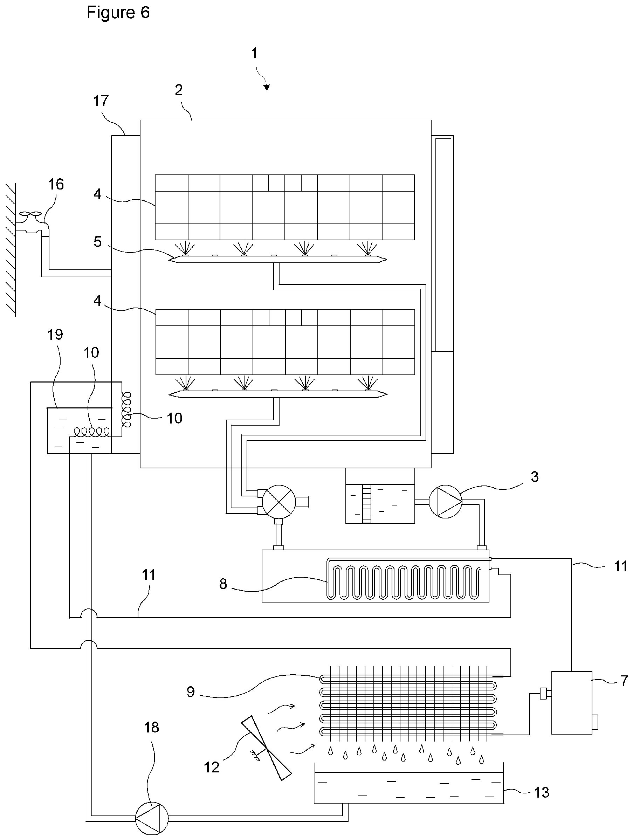

The cold water taken from the mains tap (16) into the water tank (17) cools down the capillary (10), thus enabling the evaporator (9) to draw more heat, increasing the efficiency of the heat pump (6). Moreover, while the capillary (10) is being cooled down, the water in the water tank (17) heats up. This water is used in the washing cycle, thus less energy is used for heating the washing water, decreasing energy consumption and shortening the washing program duration. In another embodiment which does not form part of the claimed invention, the dishwasher (1) comprises a second receptacle (19) which is adjacent to the water tank (17), which is in fluid connection with the water tank (17) and into which the cold condensate collected in the condensation receptacle (13) is delivered by means of a second pump (18), and the part of the refrigerant line (11) between the condenser (8) and the evaporator (9) extends up to the second receptacle (19) and the capillary (10) is placed into the second receptacle (19). In a version of this embodiment, the capillary (10) is divided into two sections, with one section being placed into the water tank (17) and the other into the second receptacle (19) (Figure 6).

In this embodiment, the water condensing in the evaporator (9) and delivered to the second receptacle (19) is heated by the capillary (10) to be delivered into the water tank (17) and enter into the washing cycle. Thus, water is saved by using the waste condensate of the evaporator (9) and energy is saved by using the water already heated in the second receptacle (19).

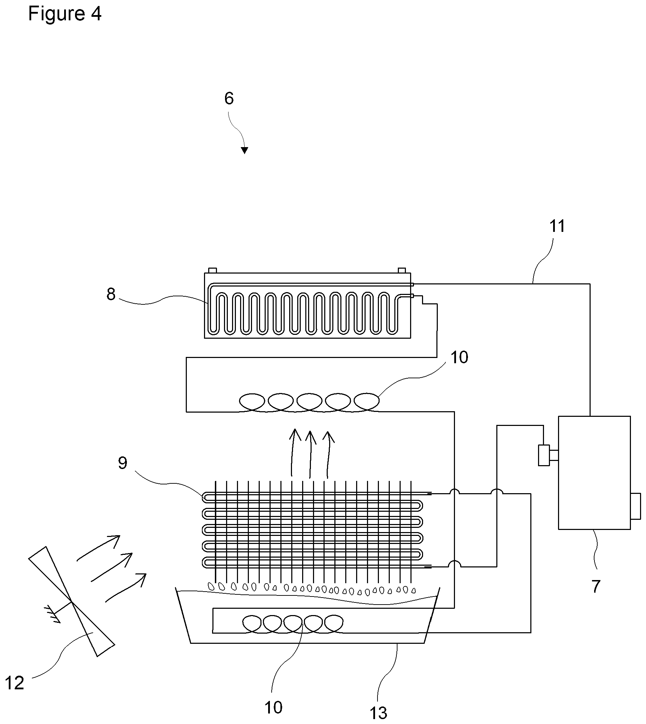

In another embodiment which does not form part of the claimed invention, the capillary (10) is cooled with the cold air leaving the evaporator (9). In this embodiment, the dishwasher (1) comprises the capillary (10) which is positioned at the air outlet of the evaporator (9) (Figure 4).

In another embodiment which does not form part of the claimed invention, the capillary (10) is divided into two sections, with one section being placed into the condensation receptacle (13) and the other section at the air outlet of the evaporator (9) (Figure 4).

In the dishwasher (1) of the present invention, the capillary (10) is cooled with cold water.

By preventing the heat transfer between the capillary (10) and the ambient air, the refrigerant passing through the capillary (10) and hence the evaporator (9) are enabled to cooled more, in other words to draw more heat from the environment. The heating performance of the heat pump (6) increases while energy consumption decreases.

## Claims

1. - A dishwasher (1) **comprising** a tub (2); a circulation pump (3); at least one rack (4); at least one spray arm (5); a heat pump (6) which heats the washing water; and a compressor (7), a condenser (8), an evaporator (9) which draws heat from the outer environment and transfers the same to the condenser (8) by means of the compressor (7), a capillary (10) which is disposed between the condenser (8) and the evaporator (9) and which decreases the pressure and hence the temperature of the refrigerant, a refrigerant line (11) composed of flow pipes wherein the refrigerant fluid flows, and at least one fan (12) which provides the heat transfer by blowing the ambient air onto the evaporator (9), which all together constitute the heat pump (6), the capillary (10) which is cooled down with the cold water which condenses in the evaporator (9) during the operation of the heat pump (6) and leaves the evaporator (9), a condensation receptacle (13) wherein the water condensing on the evaporator (9) is collected **characterized by** a first receptacle (15) into which the condensate collected in the condensation receptacle (13) is delivered by means of a first pump (14), and by the capillary (10) which is placed into the first receptacle (15).

## Patentansprüche

1. - Eine Geschirrspülmaschine (1) **umfasst** eine Wanne (2); eine Umwälzpumpe (3); mindestens ein Gestell (4); mindestens einen Sprüharm (5); eine Wärmepumpe (6), die das Waschwasser erwärmt; und einen Kompressor (7), einen Kondensator (8), einen Verdampfer (9), der der Außenumgebung Wärme entzieht und diese mittels des Kompressors (7) an den Kondensator (8) überträgt, eine Kapillare (10), die zwischen dem Kondensator (8) und dem Verdampfer (9) angeordnet ist und den Druck und damit die Temperatur des Kältemittels senkt, eine Kältemittelleitung (11), die aus Strömungsrohren besteht, in denen die Kältemittelflüssigkeit fließt, und mindestens einen Ventilator (12), der für die Wärmeübertragung sorgt, indem er die Umgebungsluft auf den Verdampfer (9) bläst, die zusammen die Wärmepumpe (6) bilden, die Kapillare (10), die mit dem kalten Wasser abgekühlt wird, das beim Betrieb der Wärmepumpe (6) im Verdampfer (9) kondensiert und den Verdampfer (9) verlässt, einen Kondenswasserbehälter (13), in dem das am Verdampfer (9) kondensierende Wasser gesammelt wird, **gekennzeichnet ist sie dadurch,** dass ein erster Behälter (15), in den das im Kondensationsbehälter (13) gesammelte Kondensat mittels einer ersten Pumpe (14) gefördert wird, und durch die Kapillare (10), die in dem ersten Behälter (15) angeordnet ist.

## Revendications

1. - Un lave-vaisselle (1) **comprenant** une cuve (2), une pompe de circulation (3), au moins une grille (4), au moins un bras d'aspersion (5), une pompe à chaleur (6) qui chauffe l'eau de lavage ; et un compresseur (7), un condenseur (8), un évaporateur (9) qui prélève la chaleur de l'environnement extérieur et la transfère au condenseur (8) au moyen du compresseur (7), un capillaire (10) qui est disposé entre le condenseur (8) et l'évaporateur (9) et qui diminue la pression et donc la température du fluide frigorigène, une conduite de réfrigérant (11) composée de tuyaux d'écoulement dans lesquels circule le fluide réfrigérant, et au moins un ventilateur (12) qui assure le transfert de chaleur en soufflant l'air ambiant sur l'évaporateur (9), qui constituent ensemble la pompe à chaleur (6), le capillaire (10) qui est refroidi par l'eau froide qui se condense dans l'évaporateur (9) pendant le fonctionnement de la pompe à chaleur (6) et qui quitte l'évaporateur (9), un récipient de condensation (13) dans lequel l'eau qui se condense sur l'évaporateur (9) est recueillie **caractérisé par** un premier récipient (15) dans lequel le condensat recueilli dans le récipient de condensation (13) est envoyé au moyen d'une première pompe (14), et par le capillaire (10) qui est placé dans le premier récipient (15).
